# FASCICULE DE BREVET EUROPEEN

(11) **EP 1 541 821 B1**
(45) Date de publication et mention de la délivrance du brevet: **14.02.2007**
(21) Numéro de dépôt: 04292933.1
(22) Date de dépôt: 09.12.2004
(51) Int. Cl.: F01N 3/08, F01N 3/01, B01D 53/32, B01D 53/92

(54) **Réacteur plasma non-thermique et ligne d'échappement de véhicule automobile comprenant ce réacteur**
Nicht thermischer Plasmareaktor und Kraftfahrzeugabgasanlage mit einem solchen Reaktor
Non-thermal plasma reactor and automotive vehicle exhaust line with such a reactor

(30) Priorité: 11.12.2003 FR 0314538
(43) Date de publication de la demande: 15.06.2005
(73) Titulaire: Peugeot Citroën Automobiles S.A., 78140 Vélizy Villacoublay (FR); Renault s.a.s., 92543 Boulogne Billancourt (FR)
(72) Inventeur: Calvo, Sabine, 78340 Les Clayes sous Bois (FR); Cormier, Jean-Marie, 45310 Baule (FR); Dionnet, Frédéric, 27520 Berville en Roumois (FR); Eymerie, Stéphane, 27120 Pacy sur Eure (FR); Lendresse, Yvane, 92500 Rueil Malmaison (FR); Motret, Olivier, 37300 Joue les Tours (FR); Pouvesle, Jean-Michel, 45750 Saint Pryve-Saint Mesmin (FR); Robin, Lionel, 76000 Rouen (FR)
(74) Mandataire: de la Bigne, Guillaume Michel Marie

(56) Documents cités:
- EP-A- 0 366 876
- EP-A- 0 379 760
- EP-A- 1 052 220
- WO-A-00/01469
- WO-A-99/25471
- US-B1- 6 432 280
- US-B1- 6 455 014

## Description

La présente invention concerne un réacteur plasma non-thermique et une ligne d'échappement pour véhicule automobile comprenant ce réacteur.

On utilise un réacteur plasma non-thermique dans une ligne d'échappement en combinaison avec un convertisseur catalytique notamment dans les moteurs Diesel et dans les moteurs essence fonctionnant en mélange pauvre. Le réacteur plasma non-thermique produit des décharges électriques à haute tension qui modifient la composition du mélange gazeux d'échappement.

Les décharges favorisent entre autre l'oxydation du monoxyde d'azote en dioxyde d'azote et la formation d'hydrocarbures partiellement oxydés à partir des hydrocarbures imbrûlés issus de la chambre de combustion du moteur.

Combinées à un système de post traitement catalytique de réduction des oxydes d'azote, ces décharges génératrices de plasma qui sont localisées en amont du catalyseur, permettent d'obtenir des taux de réduction supérieurs à ceux atteints avec un catalyseur seul.

On connaît déjà dans l'état de la technique un réacteur plasma non-thermique pour le traitement des gaz d'échappement de véhicule automobile du type comprenant une enceinte de circulation des gaz d'échappement dans laquelle est logée au moins un réacteur élémentaire comprenant des première et seconde électrodes, destinées à être portées à des potentiels différents, séparées par une barrière diélectrique ayant une forme générale tubulaire, la première électrode ayant une forme générale de tige s'étendant sensiblement coaxialement dans la barrière diélectrique, et la seconde électrode ayant une forme générale d'enveloppe cylindrique s'étendant sensiblement coaxialement autour de la barrière.

Un réacteur plasma de ce type est évoqué, par exemple, dans le document Hemingway et al. (Society of Automotive Engineers SAE 1999-01-3639) qui énumère différents inconvénients liés à cette structure : le fait d'avoir besoin de très hauts niveaux de tension pour traverser l'espace inter-électrodes, le caractère non-uniforme du champ électrique et le manque de rigidité structurelle d'un tel dispositif qui ne conviennent pas aux conditions thermiques et vibratoires rencontrées dans les lignes d'échappement automobile.

Une telle structure présente cependant de nombreux avantages, tant mécaniques (réalisation simple, étanchéité, isolation électrique) que fonctionnels. En effet, elle permet de traiter l'ensemble des gaz qui traversent le réacteur. En outre, la dissymétrie des électrodes (tige et cylindre) permet de générer un champ électrique beaucoup plus intense au voisinage de l'électrode de faible rayon de courbure (la tige) et d'améliorer ainsi l'efficacité de la décharge en créant des électrons plus énergétiques.

La présente invention a pour but de bénéficier des avantages précités de la forme tige/cylindre, tout en s'affranchissant des inconvénients mentionnés plus haut.

A cet effet, l'invention a pour objet un réacteur plasma non-thermique pour le traitement des gaz d'échappement de véhicule automobile, du type comprenant une enceinte de circulation des gaz d'échappement dans laquelle est logé un faisceau de réacteurs élémentaires s'étendant tous sensiblement parallèlement à une direction d'écoulement du gaz d'échappement, chaque réacteur élémentaire comprenant des première et seconde électrodes, destinées à être portées à des potentiels différents, séparées par une barrière diélectrique ayant une forme générale tubulaire, la première électrode ayant une forme générale de tige s'étendant sensiblement coaxialement dans la barrière diélectrique, et la seconde électrode ayant une forme générale d'enveloppe cylindrique s'étendant sensiblement coaxialement autour de la barrière, les réacteurs élémentaires étant portés par un barillet comportant au moins une plaque conductrice d'entretoisement radial des réacteurs élémentaires sensiblement perpendiculaire à la direction d'écoulement des gaz d'échappement, décrit par exemple dans le document EP-A2-1 052 220, **caractérisé en ce que** la plaque est reliée électriquement à chaque seconde électrode de réacteur élémentaire, les seconde électrodes des réacteurs élémentaires étant venues de matière avec la plaque d'entretoisement radial.

Ainsi, en scindant le réacteur plasma non-thermique en un faisceau de réacteurs élémentaires, on diminue la taille des réacteurs élémentaires ce qui permet de diminuer la tension utilisée pour les alimenter, tout en améliorant la rigidité de l'ensemble.

Par ailleurs, l'invention utilise de préférence le caractère fortement hétérogène de la distribution du champ électrique en établissant une décharge de type « couronne à effet dard », encore appelé « streamer corona " conformément à la terminologie anglo-saxonne, caractérisée par la propagation, à l'amorçage de la décharge, d'un front de charge d'espace qui va permettre d'ioniser le milieu gazeux depuis la première électrode, dite électrode émissive, vers la seconde électrode, dite contre-électrode.

A cet effet, de manière optionnelle, un réacteur plasma non-thermique selon l'invention est alimenté par une alimentation haute tension délivrant des impulsions électriques à montée en tension rapide.

Ainsi, la décharge de type « streamer corona » dans laquelle la majorité de l'énergie injectée est dédiée à la production d'électrons énergétiques optimise la dépense énergétique. La physico-chimie induite s'avère aussi efficace que celle induite par un champ uniforme tout en étant moins coûteuse.

Un réacteur plasma non-thermique selon l'invention peut en outre comporter l'une ou plusieurs des caractéristiques suivantes :
- un canal d'écoulement des gaz d'échappement est ménagé entre les deux électrodes coaxiales, ce canal ayant un diamètre extérieur inférieur à 20 mm ;
- le barillet comporte deux plaques d'entretoisement radial sensiblement parallèles ;
- le barillet comporte des entretoises d'espacement axial des plaques d'entretoisement radial ;
- les plaques d'entretoisement radial du barillet sont faites en un matériau conducteur choisi parmi de la fonte, de l'aluminium ou de l'acier inoxydable ;
- la barrière diélectrique est un tube en céramique ;
- les premières électrodes sont reliées à au moins un disque conducteur, ajouré pour permettre le passage des gaz d'échappement, disposé sensiblement perpendiculairement à la direction d'écoulement des gaz d'échappement ;
- le réacteur comporte deux disques conducteurs ajourés, chaque première électrode ayant une extrémité reliée à un disque conducteur et l'autre extrémité reliée à l'autre disque conducteur ;
- le réacteur comporte une doublure diélectrique interne entourant le disque conducteur ;
- la première électrode est destinée à être portée à un potentiel positif, et la seconde électrode est destinée à être reliée à la masse ;

L'invention a également pour objet une ligne d'échappement pour véhicule automobile, caractérisée en ce qu'elle comporte :
- un réacteur plasma non-thermique pour le traitement des gaz d'échappement tel que décrit précédemment, et
- au moins un dispositif choisi parmi un filtre à particules, un convertisseur catalytique et un convertisseur catalytique sur filtre à particules.

Une ligne d'échappement pour véhicule automobile selon l'invention peut en outre comporter la caractéristique suivante :
- elle comporte un filtre à particules et un réacteur plasma non-thermique, le filtre à particules étant situé dans la chaîne de fonctionnement en amont du réacteur plasma non-thermique.

L'invention sera mieux comprise à la lecture de la description qui va suivre, donnée uniquement à titre d'exemple et faite en se référant aux dessins annexés dans lesquels :
- la figure 1 est un schéma fonctionnel d'une ligne d'échappement comportant un réacteur plasma non-thermique selon l'invention ;
- la figure 2 est un schéma en coupe axiale d'un réacteur plasma non-thermique selon l'invention ;
- la figure 3 est un schéma en coupe transversale d'un réacteur plasma non-thermique ;
- la figure 4 est un schéma en coupe axiale d'un réacteur élémentaire ;
- la figure 5 est un schéma d'un réacteur plasma non-thermique relié à une alimentation haute tension ;
- la figure 6 est un schéma fonctionnel d'une ligne d'échappement selon une variante de réalisation de l'invention.

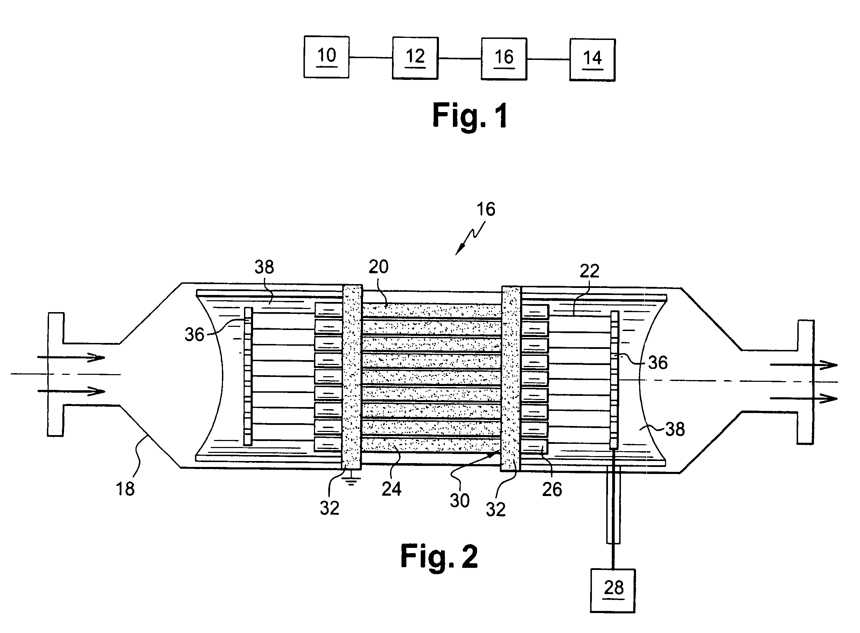

Un moteur thermique pour véhicule automobile désigné par la référence générale 10, relié à une ligne d'échappement, est représenté schématiquement sur la figure 1. La ligne d'échappement comprend de préférence un filtre à particules 12 placé en amont d'un convertisseur catalytique 14, entre lesquels est intercalé un réacteur plasma non-thermique 16 pour le traitement des gaz d'échappement selon l'invention. Cette disposition permet de limiter le dépôt de suies sur les parois internes du réacteur plasma non-thermique 16. Les inconvénients provoqués par le dépôt de suies seront décrit ultérieurement.

Ce réacteur plasma non-thermique 16 est représenté plus en détail sur la figure 2. Il comprend une enveloppe 18 en acier inoxydable de forme générale cylindrique s'étendant sensiblement selon une direction d'écoulement des gaz d'échappement. Cette enveloppe 18 constitue une enceinte de circulation des gaz d'échappement. L'enceinte représentée à une longueur de 380 mm et un diamètre de 190 mm.

Chaque extrémité de cette enveloppe 18 comporte des moyens de raccordement à la ligne d'échappement.

Un faisceau de réacteurs élémentaires 20, s'étendant tous sensiblement parallèlement à la direction d'écoulement des gaz d'échappement, est logé dans cette enveloppe 18.

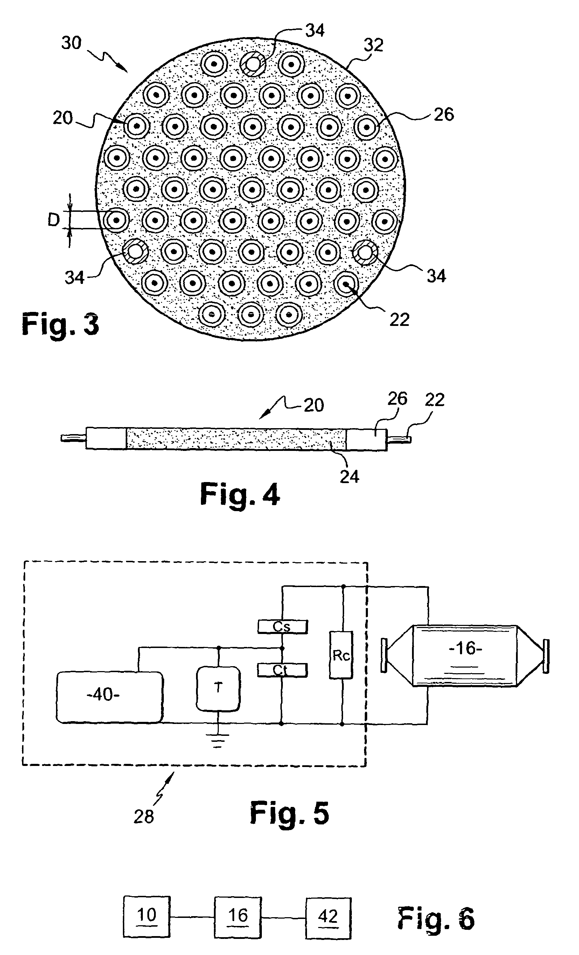

Un réacteur élémentaire 20, représenté plus en détail sur la figure 4, est destiné à produire des décharges électriques lorsque du gaz d'échappement circule à l'intérieur de ce réacteur 20.

Chaque réacteur élémentaire 20 comporte des première 22 et seconde 24 électrodes, destinées à être portées à des potentiels différents, séparées par une barrière diélectrique 26 ayant une forme générale tubulaire.

La première électrode 22, dite électrode émettrice, a une forme générale de tige s'étendant sensiblement coaxialement dans la barrière diélectrique 26. La première électrode 22, est plus longue que la barrière diélectrique 26 et dépasse à chaque extrémité de la barrière 26.

Avantageusement, la première électrode 22 est en matériau inoxydable austénitique ou ferritique (réfractaire), et la barrière diélectrique 26 formant un tube est en céramique. La tige de la première électrode 22 a par exemple un diamètre de 2 mm alors que la barrière diélectrique 26 a un diamètre intérieur de 10 mm et un diamètre extérieur de 15 mm.

La seconde électrode 24, dite contre-électrode, a une forme générale d'enveloppe cylindrique s'étendant sensiblement coaxialement autour de la barrière 26. Cette seconde électrode 24 peut être par exemple constituée par un revêtement conducteur couvrant la surface externe de la barrière diélectrique 26.

La première électrode 22 et la barrière 26 délimitent un canal d'écoulement des gaz d'échappement. La dimension de ce canal résulte d'un compromis entre la nécessité d'avoir un diamètre intérieur suffisant pour traiter un volume important de gaz et une distance inter-électrodes efficace. En effet, si la distance inter-électrode est trop grande, il est nécessaire d'augmenter la tension de charge afin d'obtenir le claquage. De plus, le nombre de micro-décharges diminue lorsque la distance inter-électrode augmente ce qui conduit à un moins bon traitement du gaz.

Avantageusement, ce canal, ménagé entre les deux électrodes, a un diamètre D extérieur inférieur à 20 mm. Dans le mode de réalisation représenté, le diamètre D de ce canal est de 10 mm.

La première électrode 22 est reliée à une alimentation haute tension 28 délivrant des impulsions électriques positives à montée en tension rapide, alors que la seconde électrode 24 est reliée à la masse par l'intermédiaire d'un barillet 30 qui sera décrit ultérieurement. Par la suite, on qualifiera la première électrode 22 d'anode 22 et la seconde électrode 24 de cathode 24.

Comme l'anode 22 et la cathode 24 sont sensiblement coaxiales, la distance entre les électrodes 22 et 24 est constante et donc les décharges créées au sein des réacteurs élémentaires 20 sont sensiblement radiales et uniformes sur toute la longueur des électrodes 22 et 24.

Pour limiter les effets de bord et les interactions directes entre les deux électrodes 22 et 24, la cathode 24 ne s'étend pas sur toute la longueur de la barrière diélectrique 26 qui conserve donc son rôle de barrière même au voisinage des extrémités. De cette manière, le champ électrique produit entre les deux électrodes 22 et 24 est uniforme quasiment sur toute la longueur du réacteur élémentaire 20, et tout le volume de gaz situé dans le réacteur élémentaire 20 est traité de manière identique.

Les réacteurs élémentaires 20 sont disposés en faisceau par exemple selon une répartition transversale en quinconce comme on peut le voir sur la figure 3.

Les réacteurs élémentaires 20, sont portés par un barillet 30 comportant deux plaques circulaires 32 d'entretoisement radial des réacteurs élémentaires, disposées sensiblement perpendiculairement à la direction d'écoulement des gaz d'échappement. Ces deux plaques 32 sont donc sensiblement parallèles.

L'espacement axial entre ces deux plaques 32 est assuré par exemple à l'aide de trois entretoises 34 d'espacement axial disposées sensiblement parallèlement à la direction d'écoulement des gaz d'échappement.

Chaque plaque circulaire 32 est perforée de plusieurs orifices traversant à l'intérieur desquels sont insérés les réacteurs élémentaires 20. Cette configuration permet de forcer le gaz d'échappement à circuler à l'intérieur des réacteurs élémentaires 20, c'est-à-dire dans les canaux de diamètre D, ce qui permet de traiter l'ensemble des gaz.

Chaque extrémité des cathodes 24 des réacteurs élémentaires 20 est en contact électrique avec une des plaques circulaires 32 du barillet 30.

Les deux plaques circulaires 32 sont faites en un matériau conducteur, par exemple, en fonte, en aluminium ou en acier inoxydable, pour que toutes les cathodes 24 des réacteurs élémentaires 20 soient au même potentiel. Une des plaques circulaires 32 est reliée à la masse.

En variante, les cathodes 24 des réacteurs élémentaires peuvent être venues de matière avec les plaques circulaires 32 d'entretoisement radial de façon à former un barillet 30 « massif » constituant une électrode unique, percé de conduits formés par les cathodes 24, s'étendant sensiblement dans la direction d'écoulement des gaz d'échappement. Les anodes et les barrières diélectriques sont alors introduites dans ces conduits de manière à former les réacteurs élémentaires.

Les anodes 22 et les barrières diélectriques 26 sont plus longues que le barillet 30. Elles dépassent donc à chaque extrémité du barillet 30.

Dans le mode de réalisation représenté, le barillet mesure 200 mm de long et 146 mm de diamètre.

A chaque extrémité du barillet 30, les extrémités des anodes 22 sont toutes reliées à un disque conducteur 36, ajouré pour permettre le passage des gaz d'échappement, disposé sensiblement perpendiculairement à la direction d'écoulement des gaz d'échappement. Ces disques ajourés 36 permettent de relier toutes les anodes 22 à un même potentiel.

L'un de ces disques ajourés 36 est relié à l'alimentation haute tension 28 qui sera décrite ultérieurement.

Pour isoler les extrémités des anodes 22 et les disques ajourés 36 de l'enveloppe 18 en acier inoxydable, l'enceinte du réacteur plasma comporte une doublure diélectrique interne 38 entourant ces extrémités des anodes 22 et ces disques ajourés 36.

L'alimentation haute tension 28 est représentée de manière plus précise sur la figure 5. Elle comporte un générateur 40 haute tension continue, un thyratron T, deux condensateurs Cs et Ct et une résistance de charge Rc.

Dans un premier temps, le thyratron T est ouvert et le générateur 40 haute tension continue charge sous une tension de l'ordre de 10 kV par exemple, le condensateur de transfert Ct. La résistance de charge Rc permet alors de charger à la même tension le condensateur Cs. Les deux électrodes 22 et 24 du réacteur plasma 16 sont alors toutes les deux à la masse ce qui ne provoque aucune décharge au sein du réacteur 16.

Dans un deuxième temps, un calculateur du véhicule (non-représenté) commande, par l'intermédiaire d'un boîtier de commande (non-représenté) relié au thyratron la fermeture de ce thyratron. La tension aux bornes du condensateur de transfert Ct s'inverse alors, ce qui double la tension aux bornes du réacteur plasma dont les électrodes provoquent une décharge dissipant ainsi l'énergie stockée dans le condensateur Cs.

Les décharges sont produites à des fréquences pouvant varier du mono-coup à plusieurs centaines de Hertz pour une forte tension appliquée (jusqu'à plusieurs dizaines de kilo-Volt) entre les anodes et les cathodes. Ces décharges consistent en des impulsions de courant de forte intensité (jusqu'à plusieurs centaines d'Ampère) et de faible durée de vie.

Les décharges électriques sont produites de telle sorte qu'elles se propagent dans les gaz d'échappement dans une zone d'activité délimitée par les barrières diélectriques en céramique 26 s'étendant parallèlement dans l'enveloppe 18 de traitement des gaz d'échappement. Ces décharges permettent la formation d'espèces chimiques activées oxydantes favorisant l'oxydation des oxydes d'azote et des hydrocarbures imbrûlés.

A l'amorçage de la décharge, en configuration de champ hétérogène (tigecylindre), sous excitation impulsionnelle positive, la propagation du front de charge d'espace qui va permettre d'ioniser le milieu gazeux depuis l'électrode émissive vers la contre-électrode se présente sous la forme de filaments d'ionisation qui assurent la jonction entre les deux électrodes. Les filaments d'ionisation vont se propager très rapidement depuis la tige (anode) vers le cylindre (cathode). Ces filaments très nombreux vont assurer une ionisation discrète du milieu gazeux, c'est ce que l'on appelle une décharge de type « streamer corona »

Le réacteur plasma 16 peut fonctionner selon deux modes.

Selon un premier mode de fonctionnement, le réacteur plasma non-thermique 16 est activé dès le démarrage du moteur. Les paramètres électriques du boîtier de commande du thyratron sont alors déterminés par le calculateur du véhicule de manière à assurer une efficacité de conversion optimum.

Selon un second mode de fonctionnement, la ligne d'échappement comporte un capteur de température placé en entrée du convertisseur catalytique 14. Ce capteur est relié au calculateur du véhicule automobile et fournit l'information sur la température d'amorçage du convertisseur catalytique 14.

Dès que le signal de température atteint la température seuil correspondant à l'amorçage du convertisseur catalytique 14, le calculateur active l'alimentation du réacteur plasma 16.

Ce second mode de fonctionnement permet de gérer de façon plus optimisée la consommation électrique à bord du véhicule et donc la consommation de carburant.

Bien entendu, l'invention ne se limite pas au mode de réalisation décrit précédemment.

En effet, selon une première variante (non-représentée), on peut placer le filtre à particules 12 en aval du réacteur plasma non-thermique 16 et du convertisseur catalytique 14.

Selon une seconde variante (non-représentée), la ligne d'échappement peut ne pas comporter de filtre à particules 12 comme par exemple dans le cas des moteurs à essence, à injection directe.

Selon une troisième variante représentée sur la figure 6, la ligne d'échappement peut comporter un réacteur plasma non-thermique 16 placé en amont d'un convertisseur catalytique 42 sur filtre à particules. Dans ce cas, des moyens formant convertisseur catalytique sont directement déposés sur les parois du filtre à particules.

Il est bien sûr préférable d'utiliser un filtre à particules en amont du réacteur plasma non-thermique. En effet, l'accumulation de particules de suies sur la contre-électrode du réacteur modifie la diélectricité de l'espace inter-électrodes et, à ce titre le régime de décharge en favorisant certains chemins préférentiels. Le réacteur devient alors moins efficace.

## Revendications

1. Réacteur plasma non-thermique (16) pour le traitement des gaz d'échappement de véhicule automobile, du type comprenant une enceinte de circulation des gaz d'échappement dans laquelle est logé un faisceau de réacteurs élémentaires (20) s'étendant tous sensiblement parallèlement à une direction d'écoulement du gaz d'échappement, chaque réacteur élémentaire (20) comprenant des première (22) et seconde (24) électrodes, destinées à être portées à des potentiels différents, séparées par une barrière diélectrique (26) ayant une forme générale tubulaire, la première électrode (22) ayant une forme générale de tige s'étendant sensiblement coaxialement dans la barrière diélectrique (26), et la seconde électrode (24) ayant une forme générale d'enveloppe cylindrique s'étendant sensiblement coaxialement autour de la barrière (26), les réacteurs élémentaires (20) étant portés par un barillet (30) comportant au moins une plaque (32) conductrice d'entretoisement radial des réacteurs élémentaires (20) sensiblement perpendiculaire à la direction d'écoulement des gaz d'échappement, **caractérisé en ce que** la plaque (32) est reliée électriquement à chaque seconde électrode (24) de réacteur élémentaire (20), les seconde électrodes (24) des réacteurs élémentaires étant venues de matière avec la plaque (32) d'entretoisement radial.

2. Réacteur plasma non-thermique (16) pour le traitement des gaz d'échappement de véhicule automobile selon la revendication 1, dans lequel un canal d'écoulement des gaz d'échappement est ménagé entre les deux électrodes (22,24) coaxiales, ce canal ayant un diamètre extérieur inférieur à 20 mm.

3. Réacteur plasma non-thermique (16) pour le traitement des gaz d'échappement de véhicule automobile selon la revendication 1 ou 2, dans lequel le barillet (30) comporte deux plaques (32) d'entretoisement radial sensiblement parallèles.

4. Réacteur plasma non-thermique (16) pour le traitement des gaz d'échappement de véhicule automobile selon la revendication 3, dans lequel le barillet (30) comporte des entretoises (34) d'espacement axial des plaques (32) d'entretoisement radial.

5. Réacteur plasma non-thermique (16) pour le traitement des gaz d'échappement de véhicule automobile selon l'une des revendications 1 à 4, dans lequel les plaques (32) d'entretoisement radial du barillet (30) sont faites en un matériau conducteur choisi parmi de la fonte, de l'aluminium ou de l'acier inoxydable.

6. Réacteur plasma non-thermique (16) pour le traitement des gaz d'échappement de véhicule automobile selon l'une des revendications précédentes, dans lequel la barrière diélectrique (26) est un tube en céramique.

7. Réacteur plasma non-thermique (16) pour le traitement des gaz d'échappement de véhicule automobile selon l'une des revendications précédentes, dans lequel les premières électrodes (22) sont reliées à au moins un disque conducteur (36), ajouré pour permettre le passage des gaz d'échappement, disposé sensiblement perpendiculairement à la direction d'écoulement des gaz d'échappement.

8. Réacteur plasma non-thermique (16) pour le traitement des gaz d'échappement de véhicule automobile selon la revendication 7, comportant deux disques conducteurs (36) ajourés, chaque première électrode ayant une extrémité reliée à un disque conducteur et l'autre extrémité reliée à l'autre disque conducteur.

9. Réacteur plasma non-thermique (16) pour le traitement des gaz d'échappement de véhicule automobile selon l'une des revendications 7 ou 8, dans lequel l'enceinte comporte une doublure diélectrique interne entourant le disque conducteur.

10. Réacteur plasma non-thermique (16) pour le traitement des gaz d'échappement de véhicule automobile selon l'une des revendications précédentes, dans lequel la première électrode (22) est destinée à être portée à un potentiel positif, et la seconde électrode (24) est destinée à être reliée à la masse.

11. Réacteur plasma non-thermique (16) pour le traitement des gaz d'échappement de véhicule automobile selon l'une des revendications précédentes, dans lequel la première électrode (22) est destinée à être reliée à une alimentation haute tension (28) délivrant des impulsions électriques à montée en tension rapide.

12. Ligne d'échappement pour véhicule automobile, **caractérisée en ce qu'**elle comporte :
- un réacteur plasma non-thermique (16) pour le traitement des gaz d'échappement selon l'une quelconque des revendications 1 à 11, et
- au moins un dispositif choisi parmi un filtre à particules (12), un convertisseur catalytique (14) et un convertisseur catalytique sur filtre à particules (42).

13. Ligne d'échappement pour véhicule automobile selon la revendication 12, comportant un filtre à particules (12) et un réacteur plasma non-thermique (16), le filtre à particules (12) étant situé dans la chaîne de fonctionnement en amont du réacteur plasma non-thermique (16).

## Claims

1. A non-thermal plasma reactor (16) for treating motor vehicle exhaust gas, the reactor being of the type comprising an exhaust gas flow enclosure in which there is housed a bundle of individual reactors (20) all extending substantially parallel to an exhaust gas flow direction, each individual reactor (20) having first and second electrodes (22, 24) for connecting to different potentials and separated by a dielectric barrier (26) of generally tubular shape, the first electrode (22) being generally in the shape of a rod extending substantially coaxially within the dielectric barrier (26), and the second electrode (24) being generally in the shape of a cylindrical casing extending substantially coaxially around the barrier (26), the individual reactors (20) being carried by a spacer unit (30) comprising at least one conductive plate (32) for radially spacing apart the individual reactors (20) substantially perpendicularly to the exhaust gas flow direction, the reactor being **characterized in that** the plate (32) is electrically connected to each second electrode (24) of the individual reactors (20), the second electrodes (24) of the individual reactors being made integrally with the radial spacer plate (32).

2. A non-thermal plasma reactor (16) for treating motor vehicle exhaust gas according to claim 1, in which an exhaust gas flow channel is provided between the two coaxial electrodes (22, 24), the channel having an outside diameter of less than 20 mm.

3. A non-thermal plasma reactor (16) for treating motor vehicle exhaust gas according to claim 1 or claim 2, in which the spacer unit (30) comprises two substantially parallel radial spacer plates (32).

4. A non-thermal plasma reactor (16) for treating motor vehicle exhaust gas according to claim 3, in which the spacer unit (30) has spacers (34) for axially spacing apart the radial spacer plates (32).

5. A non-thermal plasma reactor (16) for treating motor vehicle exhaust gas according to any one of claims 1 to 4, in which the radial spacer plates (32) of the spacer unit (30) are made of a conductive material selected from cast iron, aluminum, and stainless steel.

6. A non-thermal plasma reactor (16) for treating motor vehicle exhaust gas according to any preceding claim, in which the dielectric barrier (26) is a ceramic tube.

7. A non-thermal plasma reactor (16) for treating motor vehicle exhaust gas according to any preceding claim, in which the first electrodes (22) are connected to at least one perforated conductor disk (36) for passing the exhaust gas, and disposed substantially perpendicularly to the exhaust gas flow direction.

8. A non-thermal plasma reactor (16) for treating motor vehicle exhaust gas according to claim 7, having two perforated conductor disks (36), each first electrode having one end connected to one conductor disk and its other end connected to the other conductor disk.

9. A non-thermal plasma reactor (16) for treating motor vehicle exhaust gas according to claim 7 or claim 8, in which the enclosure includes an internal dielectric lining surrounding the conductor disk.

10. A non-thermal plasma reactor (16) for treating motor vehicle exhaust gas according to any preceding claim, in which the first electrode (22) is designed to be connected to a positive potential and the second electrode (24) is designed to be connected to ground.

11. A non-thermal plasma reactor (16) for treating motor vehicle exhaust gas according to any preceding claim, in which the first electrode (22) is designed to be connected to a high voltage power supply (28) delivering electric pulses with a fast rate of voltage rise.

12. A motor vehicle exhaust system, **characterized in that** it comprises:
a non-thermal plasma reactor (16) for treating exhaust gas according to any one of claims 1 to 11; and
at least one device selected from a particle filter (12), a catalytic converter (14), and a catalytic converter on a particle filter (42).

13. A motor vehicle exhaust system according to claim 12, including a particle filter (12) and a non-thermal plasma reactor (16), the particle filter (12) being situated upstream from the non-thermal plasma reactor (16) in the operating sequence.

## Patentansprüche

1. Nicht thermischer Plasmareaktor (16) zur Behandlung von Krafttahrzeugabgasen, umfassend einen Raum zur Zirkulation der Abgase, in dem ein Bündel von Elementarreaktoren (20) untergebracht ist, die sich alle im Wesentlichen parallel zu einer Abströmrichtung des Abgases erstrecken, wobei jeder Elementarreaktor (20) eine erste (22) und eine zweite Elektrode (24) aufweist, dazu bestimmt, auf verschiedene Potenziale gebracht zu werden, und getrennt durch eine dielektrische Barriere (26), die im Allgemeinen röhrenförmig ist, wobei die erste Elektrode (22) allgemein die Form eines Stifts besitzt, der sich im Wesentlichen koaxial in der dielektrischen Barriere (26) erstreckt, und die zweite Elektrode (24) allgemein die Form eines zylindrischen Mantels besitzt, der im Wesentlichen koaxial um die Barriere (26) verläuft, wobei die Elementarreaktoren (20) von einem zylindrischen Teil (30) getragen werden, das zumindest eine leitende Platte (32) zur radialen Versteifung der Elementarreaktoren (20) im Wesentlichen senkrecht zur Abströmrichtung der Abgase umfasst, **dadurch gekennzeichnet, dass** die Platte (32) elektrisch mit jeder der zweiten Elementarreaktor (20)-Elektroden (24) verbunden ist, wobei die zweiten Elektroden (24) der Elementarreaktoren und die Platte (32) zur radialen Versteifung aus dem selben Material integral geformt sind.

2. Nicht thermischer Plasmareaktor (16) zur Behandlung von Kraftfahrzeugabgasen nach Anspruch 1, bei dem ein Abströmkanal für die Abgase zwischen den beiden koaxialen Elektroden (22, 24) angelegt ist, wobei dieser Kanal einen Außendurchmesser unter 20 mm aufweist.

3. Nicht thermischer Plasmareaktor (16) zur Behandlung von Kraftfahrzeugabgasen nach Anspruch 1 oder 2, bei dem das zylindrische Teil (30) zwei Platten (32) zur radialen Versteifung aufweist, die im Wesentlichen parallel sind.

4. Nicht thermischer Plasmareaktor (16) zur Behandlung von Kraftfahrzeugabgasen nach Anspruch 3, bei dem das zylindrische Teil (30) Teile (34) zur axialen Beabstandung der Platten (32) zur radialen Versteifung aufweist.

5. Nicht thermischer Plasmareaktor (16) zur Behandlung von Kraftfahrzeugabgasen nach einem der Ansprüche 1 bis 4, bei dem die Platten (32) zur radialen Versteifung des zylindrischen Teils (30) aus einem leitenden Material gefertigt sind, das aus rostfreiem Gusseisen, Aluminium oder Stahl gewählt wird.

6. Nicht thermischer Plasmareaktor (16) zur Behandlung von Kraftfahrzeugabgasen nach einem der vorangehenden Ansprüche, bei dem die dielektrische Barriere (26) ein Tubus aus Keramik ist.

7. Nicht thermischer Plasmareaktor (16) zur Behandlung von Kraftfahrzeugabgasen nach einem der vorangehenden Ansprüche, bei dem die ersten Elektroden (22) mit mindestens einer leitenden Scheibe (36) verbunden sind, die durchbrochen ist, um das Passieren der Abgase zu gestatten, und die im Wesentlichen senkrecht zur Abströmrichtung der Abgase angeordnet ist.

8. Nicht thermischer Plasmareaktor (16) zur Behandlung von Kraftfahrzeugabgasen nach Anspruch 7, umfassend zwei durchbrochene leitende Scheiben (36), wobei bei jeder der ersten Elektroden das eine Ende mit einer leitenden Scheibe verbunden ist und das andere Ende mit einer anderen leitenden Scheibe verbunden ist.

9. Nicht thermischer Plasmareaktor (16) zur Behandlung von Kraftfahrzeugabgasen nach Anspruch 7 oder 8, bei dem der Raum eine interne dielektrische Auskleidung aufweist, welche die leitende Scheibe umgibt.

10. Nicht thermischer Plasmareaktor (16) zur Behandlung von Kraftfahrzeugabgasen nach einem der vorangehenden Ansprüche, bei dem die erste Elektrode (22) dazu bestimmt ist, auf ein positives Potential gebracht zu werden, und die zweite Elektrode (24) dazu bestimmt ist, mit der Masse verbunden zu werden.

11. Nicht thermischer Plasmareaktor (16) zur Behandlung von Kraftfahrzeugabgasen nach einem der vorangehenden Ansprüche, bei dem die erste Elektrode (22) dazu bestimmt ist, an eine Hochspannungsversorgung (28) angeschlossen zu werden, welche elektrische Impulse mit steilem Spannungsanstieg liefert.

12. Kraftfahrzeugabgasanlage, **dadurch gekennzeichnet, dass** diese Folgendes umfasst:
- einen nicht thermischen Plasmareaktor (16) zur Behandlung von Abgasen nach einem der Ansprüche 1 bis 11, und
- wenigstens eine Vorrichtung, die aus einem Teilchenfilter (12), einem Katalysator (14) und einem Katalysator auf einem Teilchenfilter (42) gewählt wird.

13. Kraftfahrzeugabgasanlage nach Anspruch 12, umfassend einen Teilchenfilter (12) und einen nicht thermischen Plasmareaktor (16), wobei der Teilchenfilter (12) in der Funktionskette stromauf vom nicht thermischen Plasmareaktor (16) liegt.
